# EUROPEAN PATENT SPECIFICATION

(11) **EP 4 054 979 B1**
(45) Date of publication and mention of the grant of the patent: **29.11.2023**
(21) Application number: 20789597.0
(22) Date of filing: 12.10.2020
(51) Int. Cl.: C01C 1/04

(54) **CONTROL OF AN AMMONIA SYNTHESIS LOOP AT PARTIAL LOAD**
STEUERUNG EINES AMMONIAKSYNTHESEKREISES UNTER TEILBELASTUNG
CONTRÔLE D'UNE BOUCLE DE SYNTHÈSE D'AMMONIAC À CHARGE PARTIELLE

(30) Priority: 08.11.2019 EP 19208075
(43) Date of publication of application: 14.09.2022
(73) Proprietor: CASALE SA, 6900 Lugano (CH)
(72) Inventor: RIZZI, Maurizio, 22079 Villa Guardia (CO) (IT)
(74) Representative: M. Zardi & Co S.A.
(86) International application number: PCT/EP2020/078605
(87) International publication number: WO 2021/089276

(56) References cited:
- DE-A1-102017 222 948
- US-A- 4 215 099
- US-A1- 2013 108 538
- SCHULTE BEERBÜHL S ET AL: "Combined scheduling and capacity planning of electricity-based ammonia production to integrate renewable energies", EUROPEAN JOURNAL OF OPERATIONAL RESEARCH, ELSEVIER, AMSTERDAM, NL, vol. 241, no. 3, 15 November 2014 (2014-11-15), pages 851-862, XP029098714, ISSN: 0377-2217, DOI: 10.1016/J.EJOR.2014.08.039

## Description

The present invention relates to the field of industrial synthesis of ammonia.

### PRIOR ART

Industrial production of ammonia includes basically the generation of a makeup ammonia synthesis gas (MUG) in a front-end and conversion of said make-up gas in a so-called ammonia synthesis loop.

The generation of the MUG in the front end is conventionally based on hydrogen generation from reforming of a hydrocarbon source, for example coal or natural gas, and addition of nitrogen to reach the appropriate hydrogen to nitrogen ratio for the synthesis of ammonia. The hydrogen generation may comprise reforming in a primary reformer and a secondary reformer and subsequent purification of the gas, e.g. to remove carbon monoxide, carbon dioxide and residual methane. Nitrogen can be added separately or together with firing air in a secondary reformer, according to various embodiments of the front-end.

The so obtained MUG is elevated to the ammonia synthesis pressure with a main MUG compressor and then is converted into ammonia in a synthesis loop which typically includes at least: a circulator, a catalytic converter, a condenser, a separator. The converter produces a hot ammonia-containing gaseous product which, after condensation, is separated into a liquid ammonia product and a gaseous phase recycled to the suction of the circulator. The circulator receives the high-pressure MUG delivered by the main compressor and serves to maintain the circulation in the loop.

The ammonia synthesis loop is normally conceived to run always at its full capacity or close to the full capacity, corresponding to a nominal flow rate of MUG generated in the front-end and transferred to the synthesis loop via the main compressor. Generally, running a conventional ammonia synthesis loop at a partial load below 60% - 70% of its capacity is not considered feasible or attractive.

A sudden change in the load of the converter is considered potentially harmful for the converter itself and other equipment of the high-pressure synthesis loop. For example, a fast variation of load may cause high gas velocity which can damage the internals of the converter or other items of the loop. A sudden pressure drop may result in a shock ("hammering") and damage of the equipment.

In addition, at relatively low partial load the ammonia synthesis reaction may not be thermally self-sustained particularly because the converter would receive an excessive amount of recycled ammonia compared to the fresh makeup gas and would not be able to preheat the fresh charge appropriately. The ammonia converter is normally equipped with a start-up heater; however using the start-up heater to sustain the reaction at a partial load is generally not attractive from an economical point of view and, additionally, most gas-fired heaters would not be able to follow a fast variation of load.

For all the above reasons, an ammonia converter and an ammonia synthesis loop are normally regarded as being not suitable to run at partial loads.

On the other hand, the conventional front-ends based on hydrocarbon reforming are normally operated at their full capacity to compensate for their investment costs and therefore, up to now, the poor flexibility of the synthesis loop was not perceived as a serious drawback.

In recent times, however, the so-called green ammonia plants emerged, wherein at least some of the hydrogen generated in the front-end is obtained from renewable sources. For example, hydrogen can be obtained from water electrolysis powered by a photovoltaic or wind energy and the required nitrogen may be obtained from ambient air in a pressure swing adsorption (PSA) unit or in a cryogenic air separation unit (ASU).

These ammonia plants where hydrogen comes from renewable sources are of great interest because of low operational cost and low pollution, for example they do not produce CO2 contrary to a conventional coal-based or natural gas-based process. However renewable sources like solar or wind are intrinsically subject to fluctuations, e.g. solar energy is not available during nighttime. In a green ammonia plant, the amount of makeup gas produced in the front end and transferred to the ammonia synthesis loop may vary significantly and rapidly. An ammonia synthesis loop coupled to a front end powered by renewable sources may be required to follow fast load changes and to run at low loads down to about 20-25% of the nominal capacity.

The known ammonia synthesis loops and their control systems, designed for running always at full load coupled to conventional reforming based front ends, are not suitable to follow the fast changes of load of green plants. To date, a solution to the above need is the provision of a buffer tank of the pressurized MUG, which is however large and very expensive. This drawback is a limiting factor for the exploitation of renewable energy in the field of ammonia synthesis.

US2013108538 discloses a method for regulation of an ammonia plant where a purge gas containing inerts is extracted from ammonia synthesis loop, and where the ammonia plant is operated at a partial load by keeping the ammonia synthesis loop at a nominal high pressure, and reducing the purge rate in order to increase concentration of inerts in the ammonia synthesis loop and avoid overheating of the ammonia reactor.

### SUMMARY

The invention aims to the provision of an ammonia synthesis loop, and a related method of control, adapted to run in a broad range of operating load and to follow fast load variations with a small gas buffer or even without the need of a gas buffer. Accordingly, the invention aims to an ammonia synthesis loop which is better suitable for operation with a front-end wherein hydrogen is generated from a renewable energy source and therefore the production of makeup gas is subject to fluctuation. Still another aim of the invention is to provide more possibilities for the exploitation of the renewable energy sources in the field of industrial production of ammonia.

This aim is reached with a process for synthesis of ammonia according to the claims. The invention further relates to a method for controlling an ammonia synthesis converter at a partial load, and a synthesis loop for the synthesis of ammonia according to the claims.

The process of the invention involves producing ammonia in an ammonia synthesis loop which includes: a converter where ammonia is synthesized catalytically; a circulator configured to maintain circulation in the loop and to deliver ammonia synthesis feed gas, which includes the make-up synthesis gas, to said converter; a converter feed line from the circulator to the converter; a condensation section arranged downstream the synthesis section to receive an ammonia-containing gaseous product; a separation section wherein a condensate produced in said condensation section is separated into an ammonia liquid product and a gaseous recycle stream; a recycle line from the separation section to the suction of the circulator.

Accordingly the process includes: catalytic synthesis of ammonia in the converter, from hydrogen and nitrogen contained in the feed gas; withdrawal of an ammonia-containing gaseous product from the converter; condensation of said gaseous product in a condensation section, obtaining a condensate product; separation of said condensate product into a liquid ammonia-containing product, which is extracted from the loop, and a recycle gas; reintroduction of said recycle gas at the suction of the circulator.

The invention provides that a portion of ammonia synthesis converter feed gas is separated from the converter feed line, at a point upstream of the converter, to form a bypass stream. The invention further includes reintroducing said bypass stream at the suction side of the circulator or into the ammonia synthesis loop at a point downstream of said separation section.

The bypass stream bypasses all or some of the items in the synthesis loop, including the converter; being reintroduced at the suction of the circulator or downstream of the separation section, the bypass stream does not mix with the ammonia-containing gaseous product effluent from the converter. Accordingly, said effluent of the converter is not diluted by the by-pass gas.

The circulating flow in the synthesis loop can be split, for example, between the converter and a bypass line in parallel to the synthesis loop, reintroducing the bypass gas stream at the suction of the circulator.

The ammonia-containing gas product exiting the converter is not diluted by the by-pass gas. Therefore, the condensation of ammonia is not affected by the bypass.

It has to be noted that the synthesis loop may include items in additions to those mentioned above, for example one or more heat exchangers. Particularly, heat exchangers may be provided to preheat the feed stream directed to the converter or to recover heat by cooling the hot effluent of the converter.

The condensation section of the synthesis loop may include a single condenser or a plurality of condensers. Similarly, the separation section may include a single separator or a plurality thereof. For example, a separation section may include two separators arranged in series with a heat exchanger between them. A synthesis loop normally comprises a single converter. However the invention is also applicable to a loop including more than one converter.

The amount of the makeup gas bypassing the converter (also termed bypass rate) can be determined for example by a valve operated by a suitable control system. The control system calculates the appropriate bypass rate based on one or more signal(s) and governs the opening of the valve accordingly. The bypass rate can be determined to keep one or more control parameter(s) within a target range. Control parameters may include preferably one or more of: the pressure in the converter, the pressure in the loop, the difference of temperature across the converter.

The invention provides a synthesis loop and a synthesis converter which can conform to a rapid change of the amount of makeup gas available from the front-end.

Thanks to the bypass feature of the invention, the converter is protected from overheating, excessive gas velocity and other perturbation that may be caused by a fast change in the makeup gas input flow rate. Even when the amount of makeup gas produced in the front end is small, the reactor is kept in a condition close to the condition of full load, except for the flow rate. The converter is stabilized and is less sensitive to the fluctuations of the front-end production.

A synthesis loop controlled according to the invention is therefore particularly suitable for coupling with a front-end powered by a renewable energy source, being able to follow the related fluctuation of makeup gas production and to provide stable operation down to 20% of nominal capacity or even less. The converter is maintained in a self-sustained mode of operation over a broad range of output, avoiding or reducing the need to furnish heat e.g. using the startup heater.

The control system of the invention keeps at the same time stable the pressure, the conversion across converter and the ammonia concentration at its inlet. That means that the parameters determining the reaction kinetic remains constant, including pressure, internal temperatures and composition at converter inlet, thus minimizing the perturbation to the converter operation. In addition, no overheating inside the converter takes place despite the high pressure and low plant load, because of the reaction equilibrium limitation at the outlet of catalytic beds contained in the converter.

The invention is applicable whichever the capacity of ammonia production, from very small plants to very large, operating with reciprocating compressors or centrifugal compressors.

### DESCRIPTION OF PREFERRED EMBODIMENTS

An ammonia synthesis converter has a full load condition corresponding to the processing of a nominal flow rate of make-up gas transferred from the front end to the synthesis loop. A partial load condition is a condition wherein the flow rate of make-up gas transferred from the front end to the synthesis loop is smaller than said nominal flow rate. The flow rate of make-up gas transferred from the front end to the synthesis loop can be measured, for example, at the suction of the main syngas compressor. The term "syngas" is used for short to denote the make-up synthesis gas produced in the front-end.

The converter is controlled at a partial load condition by separating a gas stream from the converter feed line, at a point upstream of the converter, to form a bypass stream and reintroducing said bypass stream at the suction side of the circulator or into the ammonia synthesis loop at a point downstream of said separation section. Said gas stream is termed bypass stream.

The amount (i.e. flow rate) of said bypass stream can be determined, according to various embodiments, taking into account one or more of the following:
i) the instant flow rate of the makeup gas transferred from the front end to the ammonia synthesis loop;
ii) the variation over time of the flow rate of makeup gas transferred from the front end to the ammonia synthesis loop;
iii) the pressure in the synthesis loop or inside the converter;
iv) the difference of temperature across the converter;
v) the hydrogen to nitrogen (H/N) ratio at the converter inlet;
vi) the ammonia condensation temperature.

The parameter i) corresponds to a percentage of load of the ammonia plant. It can be measured with a suitable gauge e.g. at the suction of the main makeup gas compressor which raises the pressure of the gas delivered by the front end to the ammonia synthesis pressure.

The parameter ii) provides an indication of how fast the variation of the flow rate of makeup gas. Use of said parameter may include measuring the time derivative of the flow rate.

The parameter iii) can be acquired by a direct detection of the pressure in the condenser or in another selected location of the loop, for example at the converter inlet. Normally all items in the ammonia synthesis loop operate substantially at the same pressure, apart from pressure drops and possible difference in elevation. Therefore, the loop pressure and the pressure in the converter are normally considered to be the same.

The parameter iv) is the difference between the temperature of the feed gas entering the converter and the temperature of an ammonia-containing product withdrawn from the converter. This difference can also be termed converter delta-T.

The parameter v) corresponds to the ratio between the hydrogen and the nitrogen molar concentration in the makeup. Said ratio can be measured for example by gas analysis and/or measuring the flow rates of the hydrogen and nitrogen produced. Said ratio is preferably maintained close to 3 because a deviation from this value means that one of the two reactants is in excess, acting mostly as an inert.

The parameter vi) corresponds to the temperature of condensation of ammonia in the condensation section of the synthesis loop where hot ammonia-containing gaseous product withdrawn from the converter is condensed and liquid ammonia is obtained.

In preferred embodiments, the amount of bypass gas is determined to maintain the above parameter iii) and/or parameter iv) within a target range which is close to the normal operation at full load.

Preferably the amount of bypass gas is controlled so that the pressure in the converter, at partial loads, is not less than 90% of the nominal synthesis pressure, preferably not less than 95% and more preferably not less than 98%. The amount of bypass gas may also be controlled to ensure that the pressure in the converter is not greater than 110% of the nominal synthesis pressure, preferably not greater than 103% and more preferably not greater than 102%. The maximum pressure may be selected to avoid intervention of safety systems, e.g. a safety valve.

Various ranges including the above boundaries may be adopted, for example the amount of bypass gas can be controlled to maintain the pressure in the reactor within 90% to 105% of the nominal pressure, more preferably 95% to 105% and even more preferably 98% to 102%.

The converter delta-T is maintained preferably within a range of plus or minus 10 °C, more preferably plus or minus 5 °C, with reference to the converter delta-T at normal full load operating condition.

The condition of partial load may include loads until the syngas transferred from the frontend to the synthesis loop is 20% of the nominal flow rate or even less. In applications where hydrogen source is provided by alkaline electrolyzers, a partial load of 20% is considered the lowest acceptable. In case of different hydrogen sources a lower partial load (less than 20%) may be reached.

In a preferred embodiment, the amount of bypass gas is determined on the basis of the pressure in the converter or in the loop, and/or on the basis of the converter delta-T as above defined. Other parameters like the variation in the makeup gas flow rate and the ammonia condensation temperature may be advantageously used to refine the calculation of the appropriate bypass flow rate in order to provide a smooth and more stable operation.

Particularly, a control based on both the pressure and the converter delta-T is preferred because it provides a smooth operation of the converter.

In an embodiment, a dedicated control is provided against drop of flow or surge of flow. The term drop of flow denotes a sudden drop of the amount of makeup gas transferred from the front-end to the synthesis loop. The term surge of flow denotes a sudden increase of the amount of makeup gas transferred from the front-end to the synthesis loop.

A preferred embodiment of the invention provides that in the event of a drop of flow:
- the amount of bypass gas is increased;
- subsequently, the amount of bypass gas is controlled to keep the pressure in the converter, or the converter delta-T, at a constant value or within a target narrow range.

A preferred embodiment of the invention provides that in the event of a surge of flow:
- the amount of bypass gas is decreased;
- subsequently, the amount of bypass gas is controlled to keep the pressure in the converter, or the converter delta-T, at a constant value or within a target narrow range

In both the above mentioned two events, the amount of bypass gas is increased or respectively decreased immediately after the drop or surge of flow is detected. This means that the increase/decrease of the bypass flow rate is operated directly upon the detection of the drop/surge of flow, for example at the suction of the main gas compressor, not upon detection of the related effect on the synthesis loop.

In the event of a drop flow, the reaction may be lost due e.g. to a low temperature of the input gas. Particularly, if the input gas temperature falls below a given threshold, the catalyst may be no longer active and the chemical reaction stops. The increase in the amount of bypass gas avoids this undesired consequence.

In the event of a surge of the flow, the loop pressure may increase suddenly, causing the safety valves to open. The decrease in the amount of bypass gas avoids this undesired consequence.

In an embodiment, a feed-forward control may be used to react to the above described events of drop of flow or surge of flow.

A preferred embodiment of the invention includes the step of cooling the makeup gas bypassing the converter, before its reintroduction at the suction of the circulator.

The amount of bypass gas can be governed by a suitable control system. In an embodiment, for example, a control system receives a signal of the amount of available makeup gas, for example at the suction of the main compressor and one or more signals reflecting the current operational state of the synthesis loop. These signal(s) may indicate the pressure in the converter and/or the converter delta-T. Based on the input about the flow rate and operational state of the loop, the control system determines the opening position of a valve placed on the bypass line of the loop and, consequently, the amount of the feed gas bypassing the converter itself.

The invention is now further elucidated with reference to the figures, wherein:

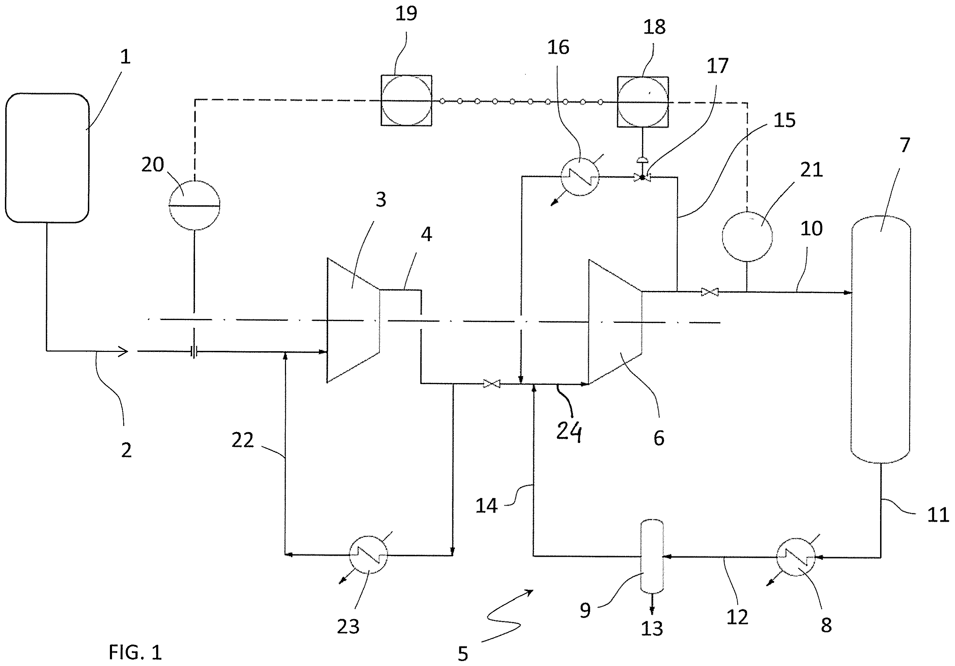

Fig. 1 illustrates a scheme of an ammonia synthesis loop according to an embodiment of the invention.

In Fig. 1, the block 1 denotes a front-end which produces a make-up ammonia synthesis gas (syngas) 2. The make-up gas 2 is fed to a main compressor 3 which delivers a compressed gas 4 to a synthesis loop 5.

The loop 5 comprises basically a circulator 6, a converter 7, a condenser 8 and a separator 9. The condenser 8 forms a condensation section and the separator 9 forms a separation section.

A gas feed is provided to the converter 7 via a converter feed line 10. A hot ammonia-containing gaseous product at line 11 is withdrawn from the converter 7 and is condensed in the condenser 8; the condensate in line 12 is separated in the separator 9 into a liquid ammonia product exported via line 13 and a gaseous phase in line 14 containing some unreacted hydrogen and nitrogen and residual vapors of ammonia, which is recycled to the suction of the circulator 6.

The feed line 10 from the circulator 6 to the converter 7 is connected to a bypass line 15 which bypasses the converter 7, the condenser 8 and the separator 9, thus connecting the delivery side of the circulator 7 back to its suction. The bypass line 15 optionally comprises a by-pass cooler 16.

The lines 10, 11 and 14 may include heat exchangers (not shown).

A valve 17 is provided on the bypass line 15 to control the flow rate through said line 15. In the example, the valve 17 has a controller 18 connected to a control unit 19.

The control unit 19 is connected to a flow gauge 20 which is arranged to detect the incoming flow rate of makeup gas from the front-end 1. For example the flow gauge 20 senses the flow rate of makeup gas 2 at the suction of the main compressor 3.

The control unit 19 is also connected to a loop pressure sensor 21 which detects the pressure at the converter inlet, for example on the line 10.

Based on the input signals from the flow gauge 20 and the loop pressure sensor 21, the control unit 19 calculates the appropriate opening of the valve 17 and, consequently, the amount of gas flowing in the bypass line 15.

An anti-surge line 22 of the main compressor 3 is also illustrated. Said line 22 includes a gas cooler 23. With the anti-surge line 22, some gas taken from the line 4 can be sent back to the suction of the main compressor 3.

In operation, the circulator 6 receives at its suction inlet 24 the compressed make-up gas 4 delivered by the main compressor 3, mixed with the gaseous phase via line 14 from top of the loop separator 9 and possibly mixed with bypass gas in the line 15.

The flow rate at the delivery side 25 of the circulator 6 can be partially deviated to the bypass line 15 according to the position of the valve 17; the remaining portion is fed to the converter 7 via the delivery line 10.

The converter 7 has a nominal ammonia synthesis pressure (also termed loop pressure) at 100% capacity, for example about 140 bar. At partial loads, the control unit 19 operates the valve 17 to vary the amount of make-up gas actually admitted to the converter 7, to keep the pressure in the loop and the converter, for example the pressure detected by the sensor 21, within a target range. Preferably this target range is a narrow range around the nominal pressure, i.e. the valve 17 is operated to keep the loop pressure substantially constant regardless of the amount of gas actually provided by the frontend 1.

In another embodiment, the circulation in the loop and the bypass flow rate in the line 15 can be controlled on the basis of the converter delta-T, e.g. by taking a converter inlet temperature T₁₀ at converter input line 10 and a converter output temperature T₁₁ at line 11. In this embodiment, the control unit 19 may be configured to keep the converter delta-T (T₁₁-T₁₀) within a target range. Particularly, the system may be configured to avoid overheating of the converter and to avoid that the temperature falls below a minimum, which may cause the converter to lose the self-sustaining condition.

Additionally, the control unit 19 may be configured to react to a rapid change in the flow rate measured by the gauge 20. For example, the control unit 19 may command a pre-opening of the valve 17 in case of a sudden drop of the flow rate of makeup gas 2. In this step the unit 19 may operate with a feed-forward control technique. Then, the unit 19 switches to normal control to keep the loop pressure stable. Similarly, the control unit 19 may react to a surge of the flow by closing the valve.

### Example 1

The following example 1 relates to a small-scale ammonia production plant with a capacity of 3 metric tons per day (MTD) of ammonia. The relevant parameters are reported for operation at 100% load and operation at 30% load wherein the plant is controlled according to the invention. At 30% load, 70% of the circulation flow is bypassed. The symbol m³/h_{EFF} denotes the cubic meters per hour at the conditions of temperature and pressure of the synthesis loop. The symbol Nm³/h denotes cubic meters per hour at normal conditions of atmospheric pressure and 0 °C.

| EXAMPLE 1 | 100% load | 30% load |
|---|---|---|
| Pressure (bar g) | 226 | 226 |
| MUG flow (Nm³/h) | 338 | 101 |
| Circulation m³/h_{EFF} | 12.04 | 3.61 |
| Converter ΔT (Tout-Tin) | 122.4 | 122.9 |
| Ammonia @ converter inlet (mol%) | 11.3 | 11.3 |
| Ammonia @ converter outlet (mol%) | 20.99 | 21.03 |
| Delta Ammonia (OUT-IN) - mol% | 9.69 | 9.73 |

### Example 2

The following example 2 relates to a large ammonia production plant with a capacity of 1000 metric tons per day (MTD) of ammonia. The relevant parameters are reported for a 100% load and a 30% load wherein the plant is controlled according to the invention. At 30% load, 70% of the circulation flow is bypassed.

| EXAMPLE 2 | 100% load | 30% load |
|---|---|---|
| Pressure (bar g) | 138.5 | 138.5 |
| MUG flow (Nm³/h) | 109737 | 32921 |
| Circulation m³/h_{EFF} | 4713 | 1435 |
| Converter ΔT (Tout-Tin) | 265.7 | 265 |
| Ammonia @ converter inlet (mol%) | 2.58 | 2.58 |
| Ammonia @ converter outlet (mol%) | 20.64 | 20.57 |
| Delta Ammonia (OUT-IN) - mol% | 18.06 | 17.99 |

The examples show that the converter is maintained in a stable operation at constant pressure. The parameters determining the kinetic of the conversion remain stable.

## Claims

1. A process for synthesis of ammonia including:
producing an ammonia make-up synthesis gas (2) in a front-end (1);
raising the pressure of said make-up gas in a first compressor (3);
feeding high-pressure make-up synthesis gas (4) delivered by said first compressor to an ammonia synthesis loop (5);
wherein said ammonia synthesis loop includes at least:
a converter (7) where ammonia is synthesized catalytically;
a circulator (6), which is a compressor configured to maintain circulation in the loop and to deliver a feed gas, which includes the make-up synthesis gas, to said converter;
a converter feed line (10) from the circulator to the converter;
a condensation section (8) arranged downstream the synthesis section to receive an ammonia-containing gaseous product;
a separation section (9) wherein a condensate produced in said condensation section is separated into an ammonia liquid product and a gaseous recycle stream;
a recycle line (14) from the separation section to the suction of the circulator;
wherein the ammonia synthesis loop (5) has a full load condition corresponding to the processing of a nominal flow rate of make-up gas (2) transferred from the front end (1) to the synthesis loop,
the process including controlling the loop (5) at a partial load condition, wherein the flow rate of make-up gas transferred from the front end to the loop is smaller than said nominal flow rate, by means of:
separating a gas stream (15) from said converter feed line (10), at a point upstream of the converter (7), to form a bypass stream;
reintroducing said bypass stream at the suction side (24) of the circulator (6) or into the ammonia synthesis loop (5) at a point downstream of said separation section (9).

2. A process according to claim 1, comprising:
detecting the synthesis pressure in the converter or at another location of the ammonia synthesis loop;
determining the amount of gas in the bypass stream so that the difference between the detected synthesis pressure at partial load and the synthesis pressure at full load is maintained within a target range.

3. A process according to claim 1 or 2, comprising:
detecting the difference of temperature across the converter, by detecting the difference between the temperature of the gas feed entering the converter and the temperature of an ammonia-containing product withdrawn from the converter;
determining the amount of gas in the bypass stream so that said difference of temperature across the converter is maintained within a target range.

4. A process according to any of claims 1 to 3, comprising:
determining the amount of gas in the bypass stream as a function of the instant amount and/or of the variation over time of the flow rate of makeup gas transferred from the front end to the ammonia synthesis loop.

5. A process according to any of the previous claims, wherein at partial loads the amount of gas in the bypass stream is controlled so that the pressure in the converter is not less than 90% of the nominal synthesis pressure, preferably not less than 95% and more preferably not less than 98%.

6. A process according to claim 5, wherein at partial loads the amount of gas in the bypass stream is controlled so that the pressure in the converter is not greater than 110% of the nominal synthesis pressure, preferably not greater than 105% and more preferably not greater than 102%.

7. A process according to any of the previous claims, wherein said condition of partial load include loads until the make-up gas transferred from the frontend to the synthesis loop is 15% of the nominal flow rate.

8. A process according to any of the previous claims, comprising:
detecting a drop or surge of the flow rate of makeup gas transferred from the front end to the synthesis loop, and reacting to said drop or surge of flow by:
a) increasing the amount of gas in the bypass stream in the event of a drop of flow or decreasing said amount in the event of a surge of flow;
b) after the above step a), controlling the amount of gas in the bypass stream to keep the pressure in the converter, or the difference of temperature across the converter, at a constant value or within a target narrow range.

9. A process according to any of the previous claims, including the step of cooling the bypass stream before its reintroduction at the suction of the circulator or in the loop.

10. A process according to any of the previous claims, wherein the production of makeup gas in the front end includes the production of hydrogen from a renewable energy source.

11. A method for controlling an ammonia synthesis loop (5) running at a partial load, wherein:
said ammonia synthesis loop (5) includes:
a converter (7) where ammonia is synthesized catalytically;
a circulator (6), which is a compressor configured to maintain circulation in the loop and to deliver a feed gas, which includes the make-up synthesis gas, to said converter;
a converter feed line (10) from the circulator to the converter;
a condensation section (8) arranged downstream the synthesis section to receive an ammonia-containing gaseous product;
a separation section (9) wherein a condensate produced in said condensation section is separated into an ammonia liquid product and a gaseous recycle stream;
a recycle line (14) from the separation section to the suction of the circulator;
wherein the ammonia synthesis loop has a full load condition corresponding to the processing of a nominal flow rate of make-up gas transferred from the front end to the synthesis loop, and said partial load corresponds to a condition wherein an amount less than said nominal flow rate is transferred from the front end to the loop,
the method includes:
separating a gas stream (15) from said converter feed line, at a point upstream of the converter, to form a bypass stream and reintroducing said bypass stream at the suction side (24) of the circulator (6) or into the ammonia synthesis loop (5) at a point downstream of said separation section (9).

12. A method according to claim 11, wherein the amount of gas in the bypass stream, at said condition of partial load, is determined as a function of one or more of the following:
the instant amount and/or of the variation over time of the flow rate of makeup gas transferred from the front end to the ammonia synthesis loop;
the pressure in the synthesis loop or in the converter;
the difference of temperature across the converter, detected as the difference between the temperature of the gas feed entering the converter and the temperature of the ammonia-containing product withdrawn from the converter.

13. A method according to claim 11 or 12, wherein the amount of gas in the bypass stream is determined in such a way that the pressure in the converter is:
not less than 90% of the nominal synthesis pressure, preferably not less than 95% and more preferably not less than 98%, and
not greater than 110% of the nominal synthesis pressure, preferably not greater than 105% and more preferably not greater than 102%.

14. A method according to any of claims 11 to 13, wherein the amount of gas in the bypass stream is determined to keep the difference of temperature across the converter, detected as the difference between the temperature of the gas feed entering the converter and the temperature of an ammonia-containing product withdrawn from the converter, within a target range.

15. A method according to any of claims 11 to 14 comprising:
detecting a drop or surge of the flow rate of flow rate of makeup gas (2) transferred from the front end (1) to the synthesis loop, and:
a) increasing the amount of gas in the bypass stream in the event of a drop of flow or decreasing said amount in the event of a surge of flow;
b) after the above step a), controlling the amount of gas in the bypass stream to keep the pressure in the converter, or the difference of temperature across the converter, at a constant value or within a target narrow range.

16. A synthesis loop (5) for the synthesis of ammonia from ammonia make-up synthesis gas, including:
a converter (7) where ammonia is synthesized catalytically;
a circulator (6), which is a compressor configured to maintain circulation in the loop and to deliver a feed gas, which includes the make-up synthesis gas, to said converter;
a converter feed line (10) from the circulator to the converter;
a condensation section (8) arranged downstream the synthesis section to receive an ammonia-containing gaseous product;
a separation section (9) wherein a condensate produced in said condensation section is separated into an ammonia liquid product and a gaseous recycle stream;
a recycle line from the separation section to the suction of the circulator;
wherein the loop further includes:
a bypass line (15) arranged to take a gas stream from said converter feed line, at a point upstream of the converter, and to reintroduce said bypass stream at the suction side (24) of the circulator (6) or into the ammonia synthesis loop (5) at a point downstream of said separation section (9);
a flow control valve (17) installed on said bypass line (15),
a control system (19) of the converter configured to control the opening of said valve (17) and therefore an amount of gas bypassing the converter via the bypass line (15),
the control system being configured to operate with a method according to any of claims 11 to 15.

## Patentansprüche

1. Ein Prozess für eine Synthese von Ammoniak, einschließlich:
Herstellen eines Ammoniakfrischsynthesegases (2) in einem Front-End (1);
Erhöhen des Drucks des Frischgases in einem ersten Kompressor (3);
Zuführen von Hochdruckfrischsynthesegas (4), das durch den ersten Kompressor an einen Ammoniaksynthesekreislauf (5) abgegeben wird;
wobei der Ammoniaksynthesekreislauf mindestens einschließt:
einen Konverter (7), wo Ammoniak katalytisch synthetisiert wird;
einen Zirkulator (6), der ein Kompressor ist, der konfiguriert ist, um eine Zirkulation in dem Kreislauf aufrechtzuerhalten und um ein Einsatzgas, das Frischsynthesegas einschließt, an den Konverter abzugeben;
eine Konverterzuführungsleitung (10) von dem Zirkulator zu dem Konverter;
einen Kondensationsabschnitt (8), der stromabwärts des Syntheseabschnitts angeordnet ist, um ein ammoniakhaltiges gasförmiges Produkt aufzunehmen;
einen Trennabschnitt (9), wobei ein Kondensat, das in dem Kondensationsabschnitt produziert wird, in ein Ammoniakflüssigkeitsprodukt und einen gasförmigen Rückführstrom getrennt wird;
eine Rückführleitung (14) von dem Trennabschnitt zu der Ansaugung des Zirkulators;
wobei der Ammoniaksynthesekreislauf (5) einen Volllastzustand aufweist, der dem Verarbeiten einer Nenndurchflussrate von Frischgas (2), das von dem Front-End (1) zu dem Synthesekreislauf übertragen wird, entspricht,
wobei der Prozess ein Steuern des Kreislaufs (5) in einem Teillastzustand einschließt, wobei die Durchflussrate von Frischgas, das von dem Front-End zu dem Kreislauf übertragen wird, kleiner als die Nenndurchflussrate ist, mittels:
Trennen eines Gasstroms (15) von der Konverterzuführungsleitung (10), an einem Punkt stromaufwärts des Konverters (7), um einen Bypassstrom auszubilden;
Wiedereinführen des Bypassstroms an der Ansaugseite (24) des Zirkulators (6) oder in den Ammoniaksynthesekreislauf (5) an einem Punkt stromabwärts des Trennabschnitts (9).

2. Ein Prozess nach Anspruch 1, umfassend:
Erfassen des Synthesedrucks in dem Konverter oder an einer anderen Stelle des Ammoniaksynthesekreislaufs;
Bestimmen der Gasmenge in dem Bypassstrom, sodass die Differenz zwischen dem erfassten Synthesedruck bei Teillast und dem Synthesedruck bei Volllast innerhalb eines Zielbereichs aufrechterhalten wird.

3. Ein Prozess nach Anspruch 1 oder 2, umfassend:
Erfassen der Temperaturdifferenz über den Konverter, durch Erfassen der Differenz zwischen der Temperatur der Gaszuführung, die in den Konverter eindringt, und der Temperatur eines ammoniakhaltigen Produkts, das von dem Konverter entnommen wird;
Bestimmen der Gasmenge in dem Bypassstrom, sodass die Temperaturdifferenz über den Konverter innerhalb eines Zielbereichs aufrechterhalten wird.

4. Ein Prozess nach einem der Ansprüche 1 bis 3, umfassend:
Bestimmen der Gasmenge in dem Bypassstrom in Abhängigkeit von der augenblicklichen Menge und/oder der Variation im Laufe der Zeit der Durchflussrate von Frischgas, das von dem Front-End zu dem Ammoniaksynthesekreislauf übertragen wird.

5. Ein Prozess nach einem der vorstehenden Ansprüche, wobei bei Teillasten die Gasmenge in dem Bypassstrom gesteuert wird, sodass der Druck in dem Konverter nicht kleiner als 90 % des Nennsynthesedrucks, vorzugsweise nicht kleiner als 95 % und mehr bevorzugt nicht kleiner als 98 % ist.

6. Ein Prozess nach Anspruch 5, wobei bei Teillasten die Gasmenge in dem Bypassstrom gesteuert wird, sodass der Druck in dem Konverter nicht größer als 110 % des Nennsynthesedrucks, vorzugsweise nicht größer als 105 % und mehr bevorzugt nicht größer als 102 % ist.

7. Ein Prozess nach einem der vorstehenden Ansprüche, wobei der Zustand von Teillast Lasten einschließt, bis das Frischgas, das von dem Front-End zu dem Synthesekreislauf übertragen wird, 15 % der Nenndurchflussrate beträgt.

8. Ein Prozess nach einem der vorstehenden Ansprüche, umfassend:
Erfassen eines Abfalls oder eines Anstiegs der Durchflussrate von Frischgas, das von dem Front-End zu dem Synthesekreislauf übertragen wird, und Reagieren auf den Abfall oder den Anstieg eines Durchflusses durch:
a) Erhöhen der Gasmenge in dem Bypassstrom im Falle eines Abfalls des Durchflusses oder Verringern der Menge im Falle eines Anstiegs des Durchflusses;
b) nach dem obigen Schritt a) Steuern der Gasmenge in dem Bypassstrom, um den Druck in dem Konverter, oder die Temperaturdifferenz über den Konverter, bei einem konstanten Wert oder innerhalb eines begrenzten Zielbereichs zu halten.

9. Ein Prozess nach einem der vorstehenden Ansprüche, einschließlich des Schritts eines Abkühlens des Bypassstroms vor dessen Wiedereinführung an der Saugung des Zirkulators oder in dem Kreislauf.

10. Ein Prozess nach einem der vorstehenden Ansprüche, wobei die Produktion von Frischgas in dem Front-End die Produktion von Wasserstoff aus einer erneuerbaren Energiequelle einschließt.

11. Ein Verfahren zum Steuern eines Ammoniaksynthesekreislaufs (5), der bei einer Teillast läuft, wobei:
der Ammoniaksynthesekreislauf (5) einschließt:
einen Konverter (7), wo Ammoniak katalytisch synthetisiert wird;
einen Zirkulator (6), der ein Kompressor ist, der konfiguriert ist, um die Zirkulation in dem Kreislauf aufrechtzuerhalten und um ein Einsatzgas, das Frischsynthesegas einschließt, an den Konverter abzugeben;
eine Konverterzuführungsleitung (10) von dem Zirkulator an den Konverter;
einen Kondensationsabschnitt (8), der stromabwärts des Syntheseabschnitts angeordnet ist, um ein ammoniakhaltiges gasförmiges Produkt aufzunehmen;
einen Trennabschnitt (9), wobei ein Kondensat, das in dem Kondensationsabschnitt produziert wird, in ein Ammoniakflüssigkeitsprodukt und einen gasförmigen Rückführstrom getrennt wird;
eine Rückführleitung (14) von dem Trennabschnitt zu der Ansaugung des Zirkulators;
wobei der Ammoniaksynthesekreislauf einen Volllastzustand aufweist, der dem Verarbeiten einer Nenndurchflussrate von Frischgas entspricht, das von dem Front-End zu dem Synthesekreislauf übertragen wird, und die Teillast einem Zustand entspricht, wobei eine Menge kleiner als die Nenndurchflussrate von dem Front-End zu dem Kreislauf übertragen wird,
das Verfahren einschließt:
Trennen eines Gasstroms (15) von der Konverterzuführungsleitung, an einem Punkt stromaufwärts des Konverters, um einen Bypassstrom auszubilden und den Bypassstrom an der Ansaugseite (24) des Zirkulators (6) oder in den Ammoniaksynthesekreislauf (5) an einem Punkt stromabwärts des Trennabschnitts (9) wiedereinzuführen.

12. Ein Verfahren nach Anspruch 11, wobei die Gasmenge in dem Bypassstrom, in dem Zustand von Teillast, in Abhängigkeit von einem oder mehreren der Folgenden bestimmt wird:
der augenblicklichen Menge und/oder der Variation im Laufe der Zeit der Durchflussrate von Frischgas, das von dem Front-End zu dem Ammoniaksynthesekreislauf übertragen wird;
dem Druck in dem Synthesekreislauf oder in dem Konverter;
der Temperaturdifferenz über den Konverter, erfasst als die Differenz zwischen der Temperatur der Gaszuführung, die in den Konverter eindringt, und der Temperatur des ammoniakhaltigen Produkts, das von dem Konverter entnommen wird.

13. Ein Verfahren nach Anspruch 11 oder 12, wobei die Gasmenge in dem Bypassstrom in einer derartigen Weise bestimmt wird, dass der Druck in dem Konverter:
nicht kleiner als 90 % des Nennsynthesedrucks, vorzugsweise nicht kleiner als 95 % und mehr bevorzugt nicht kleiner als 98 % und
nicht größer als 110 % des Nennsynthesedrucks, vorzugsweise nicht größer als 105 % und mehr bevorzugt nicht größer als 102 % ist.

14. Ein Verfahren nach einem der Ansprüche 11 bis 13, wobei die Gasmenge in dem Bypassstrom bestimmt wird, um die Temperaturdifferenz über den Konverter, erfasst als die Differenz zwischen der Temperatur der Gaszuführung, die in den Konverter eindringt, und der Temperatur eines ammoniakhaltigen Produkts, das von dem Konverter entnommen wird, innerhalb eines Zielbereichs zu halten.

15. Ein Verfahren nach einem der Ansprüche 11 bis 14, umfassend:
Erfassen eines Abfalls oder eines Anstiegs der Durchflussrate von Frischgas (2), das von dem Front-End (1) an den Synthesekreislauf übertragen wird, und:
a) Erhöhen der Gasmenge in dem Bypassstrom im Falle eines Abfalls des Durchflusses oder Verringern der Menge im Falle eines Anstiegs des Durchflusses;
b) nach dem obigen Schritt a) Steuern der Gasmenge in dem Bypassstrom, um den Druck in dem Konverter, oder die Temperaturdifferenz über den Konverter, bei einem konstanten Wert oder innerhalb eines begrenzten Zielbereichs zu halten.

16. Ein Synthesekreislauf (5) für die Synthese von Ammoniak aus Ammoniakfrischsynthesegas, einschließlich:
eines Konverters (7), wo Ammoniak katalytisch synthetisiert wird;
eines Zirkulators (6), der ein Kompressor ist, der konfiguriert ist, um die Zirkulation in dem Kreislauf aufrechtzuerhalten und um ein Einsatzgas, das Frischsynthesegas einschließt, an den Konverter abzugeben;
einer Konverterzuführungsleitung (10) von dem Zirkulator zu dem Konverter;
eines Kondensationsabschnitts (8), der stromabwärts des Syntheseabschnitts angeordnet ist, um ein ammoniakhaltiges gasförmiges Produkt aufzunehmen;
eines Trennabschnitts (9), wobei ein Kondensat, das in dem Kondensationsabschnitt produziert wird, in ein Ammoniakflüssigkeitsprodukt und einen gasförmigen Rückführstrom getrennt wird;
einer Rückführleitung von dem Trennabschnitt zu der Ansaugung des Zirkulators;
wobei der Kreislauf ferner einschließt:
eine Bypassleitung (15), die angeordnet ist, um einen Gasstrom von der Konverterzuführungsleitung, an einem Punkt stromaufwärts des Konverters, zu fassen und den Bypassstrom an der Saugseite (24) des Zirkulators (6) oder in den Ammoniaksynthesekreislauf (5) an einem Punkt stromabwärts des Trennabschnitts (9) wiedereinzuführen;
ein Durchflusssteuerventil (17), das an der Bypassleitung (15) installiert ist,
ein Steuersystem (19) des Konverters, das konfiguriert ist, um die Öffnung des Ventils (17) und daher eine Gasmenge, die den Konverter über die Bypassleitung (15) umgeht, zu steuern,
wobei das Steuersystem konfiguriert ist, um mit einem Verfahren nach einem der Ansprüche 11 bis 15 zu funktionieren.

## Revendications

1. Procédé de synthèse d'ammoniac comportant :
la production d'un gaz de synthèse d'ammoniac d'appoint (2) dans une extrémité avant (1) ;
l'augmentation de la pression dudit gaz d'appoint dans un premier compresseur (3) ;
l'introduction du gaz de synthèse d'appoint à haute pression (4) délivré par ledit premier compresseur dans une boucle de synthèse d'ammoniac (5) ;
dans lequel ladite boucle de synthèse d'ammoniac comporte au moins :
un convertisseur (7) dans lequel l'ammoniac est synthétisé par voie catalytique ;
un circulateur (6), qui est un compresseur configuré pour maintenir une circulation dans la boucle et pour délivrer un gaz d'alimentation, qui comporte le gaz de synthèse d'appoint, audit convertisseur ;
une conduite d'alimentation de convertisseur (10) allant du circulateur au convertisseur ;
une section de condensation (8) agencée en aval de la section de synthèse pour recevoir un produit gazeux contenant de l'ammoniac ;
une section de séparation (9) dans laquelle un condensat produit dans ladite section de condensation est séparé en un produit liquide d'ammoniac et un courant de recyclage gazeux ;
une conduite de recyclage (14) allant de la section de séparation jusqu'à l'aspiration du circulateur ;
dans lequel la boucle de synthèse d'ammoniac (5) présente une condition de pleine charge correspondant au traitement d'un débit nominal de gaz d'appoint (2) transféré de l'extrémité avant (1) à la boucle de synthèse,
le procédé comportant le contrôle de la boucle (5) dans une condition de charge partielle, dans lequel le débit du gaz d'appoint transféré de l'extrémité avant à la boucle est inférieur audit débit nominal, au moyen de :
la séparation d'un courant gazeux (15) à partir de ladite conduite d'alimentation de convertisseur (10), à un endroit en amont du convertisseur (7), pour former un courant de dérivation ;
la réintroduction dudit courant de dérivation du côté aspiration (24) du circulateur (6) ou dans la boucle de synthèse d'ammoniac (5) à un endroit en aval de ladite section de séparation (9).

2. Procédé selon la revendication 1, comprenant :
la détection de la pression de synthèse dans le convertisseur ou à un autre endroit de la boucle de synthèse d'ammoniac ;
la détermination de la quantité de gaz dans le courant de dérivation pour que la différence entre la pression de synthèse détectée à charge partielle et la pression de synthèse à pleine charge soit maintenue dans une plage cible.

3. Procédé selon la revendication 1 ou 2, comprenant :
la détection de la différence de température à travers le convertisseur, en détectant la différence entre la température de l'alimentation gazeuse entrant dans le convertisseur et la température d'un produit contenant de l'ammoniac retiré du convertisseur ;
la détermination de la quantité de gaz dans le courant de dérivation pour que ladite différence de température à travers le convertisseur soit maintenue dans une plage cible.

4. Procédé selon l'une quelconque des revendications 1 à 3, comprenant :
la détermination de la quantité de gaz dans le courant de dérivation en fonction de la quantité instantanée et/ou de la variation au cours du temps du débit du gaz d'appoint transféré de l'extrémité avant à la boucle de synthèse d'ammoniac.

5. Procédé selon l'une quelconque des revendications précédentes, dans lequel, aux charges partielles, la quantité de gaz dans le courant de dérivation est contrôlée pour que la pression dans le convertisseur ne soit pas inférieure à 90 % de la pression de synthèse nominale, de préférence pas inférieure à 95 % et de manière davantage préférée pas inférieure à 98 %.

6. Procédé selon la revendication 5, dans lequel, aux charges partielles, la quantité de gaz dans le courant de dérivation est contrôlée pour que la pression dans le convertisseur ne soit pas supérieure à 110 % de la pression de synthèse nominale, de préférence pas supérieure à 105 % et de manière davantage préférée pas supérieure à 102 %.

7. Procédé selon l'une quelconque des revendications précédentes, dans lequel ladite condition de charge partielle comporte des charges jusqu'à ce que le gaz d'appoint transféré de l'extrémité avant à la boucle de synthèse représente 15 % du débit nominal.

8. Procédé selon l'une quelconque des revendications précédentes, comprenant :
la détection d'une baisse ou d'une hausse du débit du gaz d'appoint transféré de l'extrémité avant à la boucle de synthèse, et la réaction à ladite baisse ou hausse de débit par :
a) l'augmentation de la quantité de gaz dans le courant de dérivation en cas de baisse de débit ou la diminution de ladite quantité en cas de hausse de débit ;
b) après l'étape a) ci-dessus, le contrôle de la quantité de gaz dans le courant de dérivation pour maintenir la pression dans le convertisseur, ou la différence de température à travers le convertisseur, à une valeur constante ou dans une plage étroite cible.

9. Procédé selon l'une quelconque des revendications précédentes, comportant l'étape de refroidissement du courant de dérivation avant sa réintroduction au niveau de l'aspiration du circulateur ou dans la boucle.

10. Procédé selon l'une quelconque des revendications précédentes, dans lequel la production de gaz d'appoint dans l'extrémité avant comporte la production d'hydrogène à partir d'une source d'énergie renouvelable.

11. Procédé de contrôle d'une boucle de synthèse d'ammoniac (5) fonctionnant à charge partielle, dans lequel :
ladite boucle de synthèse d'ammoniac (5) comporte :
un convertisseur (7) dans lequel l'ammoniac est synthétisé par voie catalytique ;
un circulateur (6), qui est un compresseur configuré pour maintenir une circulation dans la boucle et pour délivrer un gaz d'alimentation, qui comporte le gaz de synthèse d'appoint, audit convertisseur ;
une conduite d'alimentation de convertisseur (10) allant du circulateur au convertisseur ;
une section de condensation (8) agencée en aval de la section de synthèse pour recevoir un produit gazeux contenant de l'ammoniac ;
une section de séparation (9) dans laquelle un condensat produit dans ladite section de condensation est séparé en un produit liquide d'ammoniac et un courant de recyclage gazeux ;
une conduite de recyclage (14) allant de la section de séparation jusqu'à l'aspiration du circulateur ;
dans lequel la boucle de synthèse d'ammoniac présente une condition de pleine charge correspondant au traitement d'un débit nominal de gaz d'appoint transféré de l'extrémité avant à la boucle de synthèse, et ladite charge partielle correspond à une condition dans laquelle une quantité inférieure audit débit nominal est transférée de l'extrémité avant à la boucle,
le procédé comporte :
la séparation d'un courant gazeux (15) à partir de ladite conduite d'alimentation de convertisseur, à un endroit en amont du convertisseur, pour former un courant de dérivation et la réintroduction dudit courant de dérivation du côté aspiration (24) du circulateur (6) ou dans la boucle de synthèse d'ammoniac (5) à un endroit en aval de ladite section de séparation (9).

12. Procédé selon la revendication 11, dans lequel la quantité de gaz dans le courant de dérivation, dans ladite condition de charge partielle, est déterminée en fonction d'un ou de plusieurs des éléments suivants :
la quantité instantanée et/ou la variation au cours du temps du débit du gaz d'appoint transféré de l'extrémité avant à la boucle de synthèse d'ammoniac ;
la pression dans la boucle de synthèse ou dans le convertisseur ;
la différence de température à travers le convertisseur, détectée sous la forme de la différence entre la température de l'alimentation gazeuse entrant dans le convertisseur et la température du produit contenant de l'ammoniac retiré du convertisseur.

13. Procédé selon la revendication 11 ou 12, dans lequel la quantité de gaz dans le courant de dérivation est déterminée de telle manière que la pression dans le convertisseur n'est :
pas inférieure à 90 % de la pression de synthèse nominale, de préférence pas inférieure à 95 % et de manière davantage préférée pas inférieure à 98 %, et
pas supérieure à 110 % de la pression de synthèse nominale, de préférence pas supérieure à 105 % et de manière davantage préférée pas supérieure à 102 %.

14. Procédé selon l'une quelconque des revendications 11 à 13, dans lequel la quantité de gaz dans le courant de dérivation est déterminée pour maintenir la différence de température à travers le convertisseur, détectée sous la forme de la différence entre la température de l'alimentation gazeuse entrant dans le convertisseur et la température d'un produit contenant de l'ammoniac retiré du convertisseur, dans une plage cible.

15. Procédé selon l'une quelconque des revendications 11 à 14, comprenant :
la détection d'une baisse ou d'une hausse du débit du gaz d'appoint (2) transféré de l'extrémité avant (1) à la boucle de synthèse, et :
a) l'augmentation de la quantité de gaz dans le courant de dérivation en cas de baisse de débit ou la diminution de ladite quantité en cas de hausse de débit ;
b) après l'étape a) ci-dessus, le contrôle de la quantité de gaz dans le courant de dérivation pour maintenir la pression dans le convertisseur, ou la différence de température à travers le convertisseur, à une valeur constante ou dans une plage étroite cible.

16. Boucle de synthèse (5) pour la synthèse d'ammoniac à partir d'un gaz de synthèse d'ammoniac d'appoint, comportant :
un convertisseur (7) dans lequel l'ammoniac est synthétisé par voie catalytique ;
un circulateur (6), qui est un compresseur configuré pour maintenir une circulation dans la boucle et pour délivrer un gaz d'alimentation, qui comporte le gaz de synthèse d'appoint, audit convertisseur ;
une conduite d'alimentation de convertisseur (10) allant du circulateur au convertisseur ;
une section de condensation (8) agencée en aval de la section de synthèse pour recevoir un produit gazeux contenant de l'ammoniac ;
une section de séparation (9) dans laquelle un condensat produit dans ladite section de condensation est séparé en un produit liquide d'ammoniac et un courant de recyclage gazeux ;
une conduite de recyclage allant de la section de séparation jusqu'à l'aspiration du circulateur ;
dans lequel la boucle comporte en outre :
une conduite de dérivation (15) agencée pour prélever un courant gazeux à partir de ladite conduite d'alimentation de convertisseur, à un endroit en amont du convertisseur, et pour réintroduire ledit courant de dérivation du côté aspiration (24) du circulateur (6) ou dans la boucle de synthèse d'ammoniac (5) à un endroit en aval de ladite section de séparation (9) ;
une vanne de régulation de débit (17) installée sur ladite conduite de dérivation (15),
un système de commande (19) du convertisseur configuré pour commander l'ouverture de ladite vanne (17) et donc une quantité de gaz contournant le convertisseur via la conduite de dérivation (15),
le système de commande étant configuré pour fonctionner avec un procédé selon l'une quelconque des revendications 11 à 15.
